# EUROPEAN PATENT SPECIFICATION

(11) **EP 1 655 322 B1**
(45) Date of publication and mention of the grant of the patent: **16.01.2008**
(21) Application number: 04024254.7
(22) Date of filing: 12.10.2004
(51) Int. Cl.: C08G 63/183, C08K 3/00, B29C 61/02

(54) **Thermoplastic copolyester and method for producing heat-shrinkable tube by using the same**
Thermoplastisches Copolyester und Herstellungsverfahren von wärmeschrumpfbarem Schlauch das solches verwendet
Copolyester thermoplastique et méthode de production de manchon thermorétractable l'utilisant

(43) Date of publication of application: 10.05.2006
(73) Proprietor: NAN YA PLASTICS CORPORATION, Taipei (TW)
(72) Inventor: Jen, zo-chun, Taipei (TW)
(74) Representative: Viering, Jentschura & Partner

(56) References cited:
- US-A- 4 659 534
- US-A- 5 368 811
- US-A- 6 121 407

## Description

### BACKGROUND OF THE PRESENT INVENTION

### 1. Field of the Present Invention

The invention related to a modified thermoplastic copolyester, more particularly to a method for producing heat-shrinkable tube by using the thermoplastic copolyester, and the heat-shrinkable tube, after heat treatment, will possess the characters of proper heat shrinkage, good heat resistance, good chemical resistance and good heat aging resistance, and may tightly and uniformly fit on the surface of the object being covered without the defects of inflation, loose or wrinkle that enable the heat-shrinkable tube to be used as insulating material for the covering of electronic parts.

### 2. Description of Prior Art

The heat-shrinkable electric insulating tube commonly used by the public since long ago was made of PVC. However, following the trend of prohibiting the use of PVC the European countries and Japan already issue a ban on prohibiting the use of PVC in electric equipment.

On the prior US Patent No. 5,368,811 had disclosed a polyester and a method for producing heat-shrinkable tube by using the Polyester as the covering of capacitors. The polyester disclosed in the patent was formed by a mixture containing polyethylene terephthalate (PET) of 20∼70 wt% and copolyester of 30∼80 wt%. And, the copolyester was obtained from the reaction of the mixture containing pure terephthalic acid (PTA) of 65~95Wt% based on the diacid and Isophthalic Acid (IPA) of 5∼35 wt% as well as Ethylene Glycol.

Besides, the polyester disclosed on the prior US Patent No. 5,368,811 may be used for producing unstretched tube by employing melt extruding method, and the unstretched tube is immediately quenched and reheated to 72~98□, then the unstretched tube undergoes biaxial stretching to achieve a stretching ratio of 1.01~1.4 times in machine direction (MD) and 1.3 ~2.2 times in transverse direction (TD). Finally, the stretched heat-shrinkable tube is cooled and wound into roll.

Since the heat-shrinkable tube made by the method of the aforesaid US patent has a crystallinity not higher than 20%, a shrinkage between 5~26% in MD and a shrinkage of at least 25% in TD shall be achieved after it is heated in hot water with temperature of 98±2 □ for 10 seconds. This kind of heat-shrinkable tube when used as the covering for capacitor through heat-shrinking process can achieve perfect covering condition.

Another prior US Patent No. 5,403,454 had disclosed a production method for improving the printability of the heat-shrinkable polyester tube. The method included using the polyester which was formed by the copolyester mixture containing polyethylene terephthalate (PET) of 20~99.5wt% and polyethylene glycol (PEG) of 0.5~80wt%, the content of the polyethylene glycol is 0.1~4wt% as based on the copolyester.

The prior US Patent also disclosed that the heat-shrinkable tube produced by the said method underwent Corona Discharge Treatment under condition of 100 ∼ 800 W-min/m² to improve the printability of the heat-shrinkable polyester tube.

Also the prior US Patent No.5,718,953 had disclosed a method for producing heat-shrinkable tube by using polyethylene sulfide and employing melt-extruding method to produce unstretched tube which then underwent tubular stretching with temperature of 85~105□ with a stretching ratio of 1.05∼4.5 times in machine direction (MD) and 1.3∼4.5 times in transverse direction (TD).

The heat-shrinkable tube produced by this method if heated in hot water for 30 seconds, will present a shrinkage in transverse direction between 25 ~80%. In addition, when a capacitor is covered with the heat-shrinkable tube, and heated under temperature of 180 □ for 20 seconds to have the heat-shrinkable tube tightly wraps and fits on the capacitor due to heat-shrinking. Then heat the capacitor in an oven with temperature of 160□ for 3 minutes. Remove the capacitor from oven, no any defect of wrinkle, inflation, falling off or deformation of the heat-shrinkable tube was found.

Further the prior US Patent 6,528,133 had disclosed a polyester and heat-shrinkable tube made of the polyester for the covering of capacitor. The polyester disclosed in the patent was obtained from the mixture containing copolymerised polyester of 80 ~ 99wt% and polybutylene terephthalate (PBT) of 1~20wt%, and the copolymerized polyester contains polyethlene naphthalate (PEN) of 1~15 mole % and polyethylene terephthalate (PET) of 85∼90 mole % with inherent viscosity of 0.65~1.0 dl/g.

In addition the polyester disclosed in the patent can be used for making unstretched tube by employing melt-extruding method, and the unstretched tube so obtained was rapidly quenched and reheated to a temperature level higher than the Glass Transition Temperature (Tg), meanwhile a biaxial stretching is followed to get a stretching ratio of 1~1.5 times in machine direction (MD) and a stretching ratio of 1.7~2.5 times in transverse direction (TD). Then cooled the stretched heat-shrinkable tube and wound it into roll stock The heat-shrinkable tube so obtained, if put in hot water with temperature of 98□ for 30 seconds, will show a shrinkage of 5~15% in machine direction and a shrinkage of 40~60% in transverse direction. Further, if cover the capacitor with the heat-shrinkable tube, and have the capacitor heated to a temperature level of 260∼280 □ for 8 seconds to let the heat-shrinkable tube tightly fit on the surface of the capacitor, then put the capacitor in an oven with temperature of 170±5□ for 3 minutes, and followed by heating the capacitor in hot water with temperature of 100±2□ for 10 minutes. Then remove the capacitor from oven. No any defect of wrinkle, inflation, falling off or deformation was found on the heat-shrinkable tube.

Although the above-mentioned prior arts all have showed that polyester can be used for producing heat-shrinkable tube, the methods disclosed in US Patent No. 5,368,811 and 5,403,454 both used the mixture of polyester of different types, and both of them didn't disclose the heat aging resistance of the heat-shrinkable tube when it is actually used as the covering of capacitor through heat-shrinking process. Further, the prior art of US Patent No. 6,528,133 also used a mixture of two types of polyester and disclosed the condition and procedure for testing the heat resistance of the heat-shrinkable tube which include heating the capacitor covered with the heat-shrinkable tube in an oven with temp. of 170±5□ for 3 minutes and heating the same capacitor in hot water with temp. of 100±2□ for 10 minutes, while another US Patent No. 5,718,953 used polyethylene sulfide for producing heat-shrinkable tube which, though possessed good heat aging resistance, yet its cost is relatively high.

Moreover, following the increasingly higher demand on the function of electronic products, the requirements on the specification of electronic parts also become increasingly strict such as the requirements on heat resistance and heat aging resistance of capacitor which has been further raised to an even higher level that demands further improvement of heat-shrinkable tube so as to ensure better quality of the covering material for electronic parts.

### SUMMARY OF THE PRESENT INVENTION

Based on the above, the major purpose of the invention is to disclose a modified copolyester which has modified composition and characteristics completed during the synthetic stage of the condensation polymerization reaction that enables the polyester plastic material of the invention to be in the form of Random Copolyester which, when used for producing heat-shrinkable tube, can enable the elimination of the inconvenience of using the mixture of polyesters of different types for producing heat-shrinkable tube as employed by those prior arts but also the elimination of the problem of compatibility between polyesters of different types, i.e. to provide the advantages of easy to obtain the material, apparently lowered cost and easy to be processed.

Another purpose of the invention is to provide a heat-shrinkable copolyester tube by using the thermoplastic copolyester of the invention which may be used as the surface covering material of an object by its heat-shrinking character, the heat-shrinkable tube when fits on the surface of an object by heat-shrinking may provide the superior effect of enabling a perfect outward appearance without defect, presenting the shape of the object and achieving the effect of protection and electric insulation; particularly after the object covered with the heat-shrinkable tube of the invention is heated in an oven with temp. of 180±2□ for 30 minutes, or heated in an oven with temp. of 105±2□ for 180 minutes the covering of the object can still tightly and evenly fit on the surface of the object without any defect of wrinkle, inflation, loose, falling off, crack or standing-up. Furthermore, the object covered with the heat-shrinkable tube made of the thermoplastic copolyester of the invention after passing the strict heat aging resistance test may still tightly and evenly fit on the surface of the object without any defect of wrinkle, inflation, loose, falling off, crack or standing-up portion.

The minor purpose of the invention is that inorganic granules of specific size are added into the reactants during melting condensation polymerization stage of the reaction for forming the thermoplastic copolyester of the invention that enables the character of easy unwinding of the heat-shrinkable tube after being wound into roll stock. This makes it suitable for high speed heat-shrinking covering process.

Another purpose of the invention is to provide a heat-shrinkable tube made of the copolyester of the invention for the covering of object for providing the effect of protection and electric insulation. Therefore, the polyester heat-shrinkable tube may be applied on electronic parts as the protective and insulating covering such as the insulating covering of aluminum capacitor.

### DETAILED DESCRITION OF THE PREFERRED EMBODIMENTS

The synthesis of the copolyester as disclosed in the present invention may be achieved by employing the traditional method for synthesizing polyester such as PTA process or DMT process; when PTA process is employed the diacid and diol are used to undergo direct esterification without the need of any catalyst. The gaseous mixture of ethylene glycol and water produced during esterification is then separated in distillation tower through which the ethylene glycol flows into esterification tank, and then polymerization catalyst is added into the esterification tank before completion of the esterification reaction. The catalyst selected for the reaction shall be the antimony catalyst or germanium catalyst or titanium catalyst or their mixture. Then stabilizing agent containing phosphorus is added after the end of esterificaiton reaction but before the polymerization starts. The inorganic granules such as titanium dioxide, barium sulfate, calcium carbonate or silicon dioxide shall also be added into the mixture during this stage. Then the mixture undergoes polymerization reaction under vacuum environment. When the viscosity of the copolyester reaches a level higher than 0.6 dl/g, the product of the copolyester is removed from the reactor, and rapidly quenched, and then cut into granulated copolyester.

When DMT process is employed the diacid in the form of ester and diol material are used to undergo the ester-exchange reaction. Before the reaction starts, the ester exchange catalyst such as manganese acetate shall be added in. The methyl alcohol produced in the reaction separated from the distillation tower will not flow back to the ester-exchange tank. When the predetermined theoretical amount of methyl alcohol of 98% is removed and collected, the stabilizer containing phosphorus shall be added in to enable the ester-exchange catalyst to become inactive, and then add the polymerization catalyst selected from the catalysts group comprising antimony catalyst, germanium catalyst, titanium catalyst or their mixture. The polymerization reaction undergoes in the vacuum state environment. When the viscosity of the copolyester reaches a level higher than 0.6 dl/g, the product is removed from the reactor, and quickly quenched, and cut into granules.

However, no matter what process is employed, the PTA or DMT, the granulated copolyester obtained from these processes must undergo a solid polymerization reaction to raise its inherent viscosity to a level within the range of 0.85~1.05 dl/g to obtain the desired copolyester as disclosed in the present invention.

When the PTA process is employed to synthesize the copolyester as metnioned in the invention, the diacid used in the process contains the major component of pure terephthalic acid, and isophthalic acid of 5 to 15 mole % based on the diacid, in addition, the diacid may further contain other minor component such as 2,6-naphthylene dicarboxylic acid or the ester type compound thereof which, however, is not the component absolutely needed by the invention, and is in an amount of not higher than 8 mole% based on the copolyester.

Besides, if the copolyester as mentioned in the invention contains isophthalic acid in an amount less than 5 mole% as based on the component of diacid, the heat-shrinkable tube made of the copolyester, after heated in an oven with temperature 180□ for 30 minutes, will generate deformation of inflated and loose surface. However, if the copolyester contains isophthalic acid in an amount higher than 15 mole % as based on the component of diacid, the copolyester will be in the amorphous state that causes the copolyester unable to undergo solid polymerization to increase its inherent viscosity. The diol component forming the copolyester of the invention is mainly the ethylene glycol, and the diol further contains at least one of other kinds of diol component selected from the group comprising diethylene glycol, cyclohexane dimethanol, propanediol, 2,2-dimethyl-1,3-propanediol (NPG), 2-butyl-2-ethyl-1,3-propanediol (BEPG) and butylene glycol. These minor components shall not exceed 10 mole % as based on the total diol contained; if the amount of minor component contained exceeds 10 mole % as based on the total diol, the copolyester will be in the Amorphous state that caused it unable to undergo solid polymerization process to increase its inherent viscosity.

The preferred method for synthesizing the copolyester of the invention is adding inorganic granules before the end of the melt-condensation polymerization stage, but more preferred method is adding inorganic granules before the condensation polymerization starts. The inorganic granules used in the invention shall be the one or more than one selected from the group comprising titanium dioxide, barium sulfate, calcium carbonate and silicon dioxide or their mixture, more preferably, titanium dioxide or barium sulfate shall be chosen as the additive, and the amount of the inorganic granules to be added in is between 0.005 ~0.5wt% as based on the weight of the copolyester, the size of the inorganic granules shall be less than 1 micron (µm), preferably, between 0.1~0.5 micron. The purpose of adding the above-said inorganic granules during the melt-condensation polymerization stage for synthesizing the copolyester of the invention is to enable a more easy unwinding of the heat-shrinkable tube of the invention after wound into roll stock so that the heat-shrinkable tube of the invention can be imparted the merit of being suitable for high speed heat-shrinking covering process.

The copolyester of the invention may be added with other additives according to the actual needs during processing. These additives includes such as anti-flaming agent, dyeing pigment, anti-oxidizing agent, lubricant, ultra-violet radiation absorber or corona resistant agency etc.

The precursor of the copolyester obtained through melt-polymerization process as disclosed in the invention has to further undergo solid polymerization reaction to increase its inherent viscosity to a level within 0.85~1.05 dl/g; if the inherent viscosity is lower than 0.85 dl/g, a defect of uneven tube wall thickness shall be resulted in during production of the heat-shrinkable tube by melt-extruding process. And, if the inherent viscosity is higher than 1.05 dl/g, it is unable to produce the heat-shrinkable tube having thinner tube wall thickness such as thinner than 150 micron.

Analysis of the thermo-properties of the copolyester of the invention has been made by employing Differential Scanning Colorimeter (DSC); the copolyester is rapidly quenched after completely melted, and then tests its Glass Transition Temp. (Tg), Crystallization Temp. (Tch) and melting point (Tm) for each temperature increment of 20□ during temperature rising process. The preferable Glass Transition Temp. is between 65~75□, the preferable Crystallization Temp. is higher than 170□ or preferably is almost non-existing. The heat generation due to crystallization is preferably less than 15 J/g or preferably the copolyester has no crystallization phenomenon, the preferred melting point is between 210 ~250□, and the heat of fusion is preferably less than 15 J/g.

In the following is the description of the method or step for producing the heat- shrinkable tube by using the copolyester of the invention:

Dry the copoloyeser of the invention in an environment containing dehumidified air under temp. of 150~170□ for a period of 4∼6 hours, then the dried copolyester is melted by extruding machine continuously with a pre-determined melting temperature higher than the melting point (Tm). After the melted colloid is pushed to pass the annular opening of the extruding die, it is rapidly quenched by cooling air or water to form unstretched circular tubing, then the tubing is transported by a set of feed roller into hot water or infrared ray tube for heating to a temperature level higher than the Glass Transition Temp., then introduce compressed air to blow the unstretched tubing to the desired tube of pre-determined diameter which is then drain by a set of cooling nip roller, and wound into roll stock of heat-shrinkable tube. And, through the above-mentioned process a stretching in transverse direction (TD) is achieved in blow-expansion step, and a stretching in machine direction (MD) is achieved due to the speed difference between the pair of nip roller and the pair of feed roller.

Since the tube after the biaxial drawing is rapidly quenched, it may shrink in both of the transverse direction (TD) and machine direction (MD) after reheating and cooling, these enable the tube to be suitable for the covering of object. The thickness of the heat-shrinkable tube of the invention is between 20∼200 micron, and the diameter of the tube is preferably between 4-300mm.

The heat-shrinkable tube made of the copolyester as disclosed in the invention has a stretching ratio in machine direction (MD) equals the proportion of the drawing speed of the heat shrinkable tube after stretching to the feeding speed of the unstretched tube; and transverse stretching ratio equals the proportion of tube diameter after blow-expansion to the unstretched tube diameter.

When the heat-shrinkable tube made of the copolyester of the invention the preferred temperature for blowing-expansion process is between 85~105 □, the stretching ratio in machine direction (MD) is preferably between 1.0∼3.0 times, and the stretching ratio in transverse direction (TD) is preferably between 1.3~1.5 times.

The heat-shrinkable tube made of the copolyester of the invention after heated in hot water with temp. of 100 □ for 30 seconds presented a heat-shrinkage in machine-direction between 5%~15% which is the optimal range of shrinkage, because if the heat-shrinkage in machine direction is less than 5%, the edge portions of the heat-shrinkable tube will unable to tightly fit on the surface of the object, whereas if the heat-shrinkable in machine direction (MD) is greater than 15%, a deformation and dislocation of the heat-shrinkage tube will be caused when the object is covered with the heat-shrinkable tube; Also, the heat-shrinkable of the heat-shrinkage tube of the invention in transverse direction is higher than 35% which is also the optimal condition, because if the heat-shrinkage in transverse direction (TD) is less than 35%, it is likely that the heat-shrinkable tube is unable to tightly fit on the surface of the object.

Heat the object covered with the heat-shrinkable tube of the invention to a temperature level higher than 200□ but lower than the melting point of copolyester will cause the heat-shrinkable tube to shrink to accomplish the covering.

The object covered with the heat-shrinkable tube after heating in oven with temperature of 180 □ for 30 minutes, and after heating in oven with temperature of 105□ for 3 hours the result showed a tight and secure fitting of the heat-shrinkable tube on the surface of the object without defects of wrinkle, inflation, loose, falling off, crack or standing up.

The heat-shrinkable tube made of the copolyester of the invention after printed and then washed with acetone showed that no any printing character become dim or unclear.

In the following are several examples of embodiment of the invention and comparative examples for further describing the invention. However these examples are not for limiting the scope of patent right of the invention.

### EXAMPLE OF EMBODIMENT

### Example 1

Measured bis-hydroxyethyl terephthalate monomer (BHET) of 10.27 parts by weight, isophthalic acid (IPA) of 0.432 parts by weight, and ethylene glycol (EG) of 3,243 parts by weight in reactor. The esterification reaction started when the temperature went up to a level over 190□. The reaction pressure was 1.0~1.5kg/cm². The reaction continued for 180 minutes to have the rate of esterification reached 95%, then added titanium dioxide, phosphoric acid stabilizer, manganese acetate catalyst of 0.035 parts by weight, and then lower the inner pressure to an approximately vacuum state of 1 torr with temperature between 250~280□ until the viscosity reached a level over 0.60 dl/g. Then the product was unloaded from the reactor, and cooled to form cylinder shaped amorphous granules; the amorphous granules so obtained were then loaded in solid polymerization reactor equipment where the polyester granules continued to react under temperature between 190~220□, with the reactor equipment filled with nitrogen gas or made into approximately vacuum state to raise the viscosity of the polyester granules to 0.95 dl/g.

Dried the polyester granules by moisture-free air with temperature of 150□ for 4 hours, then fed the granules into extruding machine for melt-extruding processing under temperature of 250~270□, having the melted colloid passed through an extruding die with annular opening to form unstretched tubing which was immediately quenched in cooling water tank followed by employing a pair of feed roller with rotating speed of 100 rpm to transport the unstretched tubing to pass the heater where the tubing was heated to a temperature between 90~100 □. Then compressed air was introduced to have the unstretched tubing to expand through blow-expansion process to obtain a tubing with a diameter 1.3 times that of the original unstretched tubing, then the expanded tubing was drawn by a pair of nip roller with rotating speed of 105 rpm to obtain the desired heat-shrinkable tube.

A series of test were then followed to verify the quality of the heat-shrinkable tube produced by the above-mentioned process.

The test included tube-blowing stability test, exterior covering perfectness test by heating the tube in an oven with temp. of 180□ for 30 minutes, exterior covering perfectness test by heating the tube in an oven with temp. of 105□ for 3 hrs, unwinding ability test for the heat-shrinkable tube in roll, test of perfectness of print character after washing the printed tube with acetone. The test results are shown in Table 1.

### Example 2

Use the same method as that of Example 1 except measuring bis-hydroxyethyl terephtalate monomer (BHET) of 9.73 parts by weight and isophthalic acid (IPA) of 0.864 parts by weight, then put these materials into reactor for melt polymerization process reaction.

After completion of the melt polymerization reaction, the solid polymerization was followed to raise the viscosity to 0.97 dl/g; then the heat-shrinkable tube produced by this method was tested for the required test items. The test results are shown in Table 1.

### Example 3

Use the same method as that of Example 1 except measuring bis-hydroxyethyl terephthalate monomer (BHET) of 9.186 and isophthalic acid (IPA) of 1.296 parts by weight, then put these materials into reactor for melt polymerization reaction.

After completion of the melt polymerization reaction, the solid polymerization process was followed to raise the viscosity to 0.97 dl/g; then the heat-shrinkable tube produced by this method was tested for the required test items. The test results are shown in Table 1.

### Example 4

Use the same method as that of Example 1 except measuring only bis-hydroxyethyl terephthalate monomer acid (BHET) of 10.81 parts by weight without using IPA. Then added ethylene glycol (EG) of 2.91 parts by weight and 2-butyl-1, 3-propanediol (BEPG) of 0.552 parts by weight.

After completion of melt polymerization reaction, the solid polymerization process was followed to raise the viscosity to 0.95 dl/g; then the heat-shrinkable tube was tested for the required test items. The test results are shown in Table 1.

### Example 5

Use the same method as that of Example 1 except measuring only bis-hydroxyethyl terephthalate monomer (BHET) of 10.81 parts by weight without IPA. Then added ethylene glycol (EG) of 2.91 parts by weight and cyclohexane dimethanol (CHDM) of 0.750 parts by weight for melt polymerization reaction.

After completion of melt polymerization reaction, the solid polymerization process was followed to raise the viscosity to 0.95 dl/g; then the heat-shrinkable tube produced by this method was tested for the required test items. The test results are shown in Table 1.

### Example 6

Use the same method as that of Example 2 except without adding TiO2. After completion of melt polymerization reaction the solid polymerization process was followed to raise the viscosity to 0.95 dl/g; then the heat-shrinkable tube was tested for the required test items. The test results are shown in Table 1.

### Example 7

Use the same method as that of Embodiment 1 except measuring bis-hydroxyethyl terephthalate monomer (BHET) of 9.94 parts by weight and isophthalic acid (IPA) of 0.692 parts by weight.

After completion of melt polymerization reaction, the solid polymerization process was followed to raise the viscosity to 0.85 dl/g. Then the heat-shrinkable tube was tested for the required test items. The test results are shown in Table 1.

### Comparative example 1

Use the same method as that Example 1 except measuring only bis-hydroxyethyl terephthalate monomer (BHET) of 10.81 parts by weight without adding IPA. Then added ethylene glycol (EG) of 3,243 parts by weight.

After completion of melt polymerization reaction the solid polymerization process was followed to raise the viscosity to 0.95 dl/g; the heat-shrinkable tube was tested for the required test items. The test results are shown in Table 1.

### Comparative example 2

Use the same method as that of Example 1 except measuring bis-dhydroxyethyl terephthalate monomer (BHET) of 10.537 parts by weight, isophthalic acid (IPA) of 0.216 parts by weight and ethylene glycol (EG) of 3,243 parts by weight.

After completion of melt polymerization reaction the solid polymerization process was followed to raise the viscosity to 0.95 dl/g. Then the heat-shrinkable tube was tested for the required test items. The test results are shown in Table 1.

### Comparative example 3

Use the same method as that of Example 1, except measuring bis-hydroxyethyl terephthalate monomer (BHET) of 8.970 parts by weight, isophthalic acid (IPA) of 1.470 parts by weight and ethylene glycol (EG) of 3.243 parts by weight. The inherent viscosity was raised to 0.75 dl/g through melt polymerization.

Since serious caking occurred during solid polymerization the copolyester without passing solid polymerization was used directly for making heat-shrinkable tube with the drying temperature before melt processing set at 70□. Then the heat-shrinkable tube so obtained was tested for the required test items. The test results are shown in Table 1.

### Comparative example 4

Use the same method as that of Example 5, measured bis-hydroxyethyl terepthalate monomer (BHET) of 10.81 parts by weight and ethylene glycol (EG) of 2.260 parts by weight and cyclohexane dimethanol (CHDM) of 2.250 parts by weight but without adding IPA. Put these materials in reactor to undergo melt polymerization to raise the inherent viscosity to 0.80 dl/g.

Since serious caking occurred during solid polymerization the copolyester without passing solid polymerization was used directly for making heat-shrinkable tube, with the drying temp. before melt processing set at 70□. The heat-shrinkable tube so obtained was tested for the required test items. The test results are shown in Table 1.

### Discussion of the test results

The test results in Table 1 show that the inherent viscosity of the copolyester of Example 1 through Example 7 was raised to a level between 0.85 ∼ 1.05 dl/g.

The heat-shrinkable tube made of these types of copolyester all have superior properties of tube blow-forming stability, perfectness of outward appearance of the covering by heating in oven with temperature of 180□ for 30 minutes, perfectness of outward appearance of covering by heating in oven with temp. of 105□ for 3 hours, ability to rewind the heat-shrinkable tube in roll stock and the Perfectness of the print character on tube after washing with acetone.

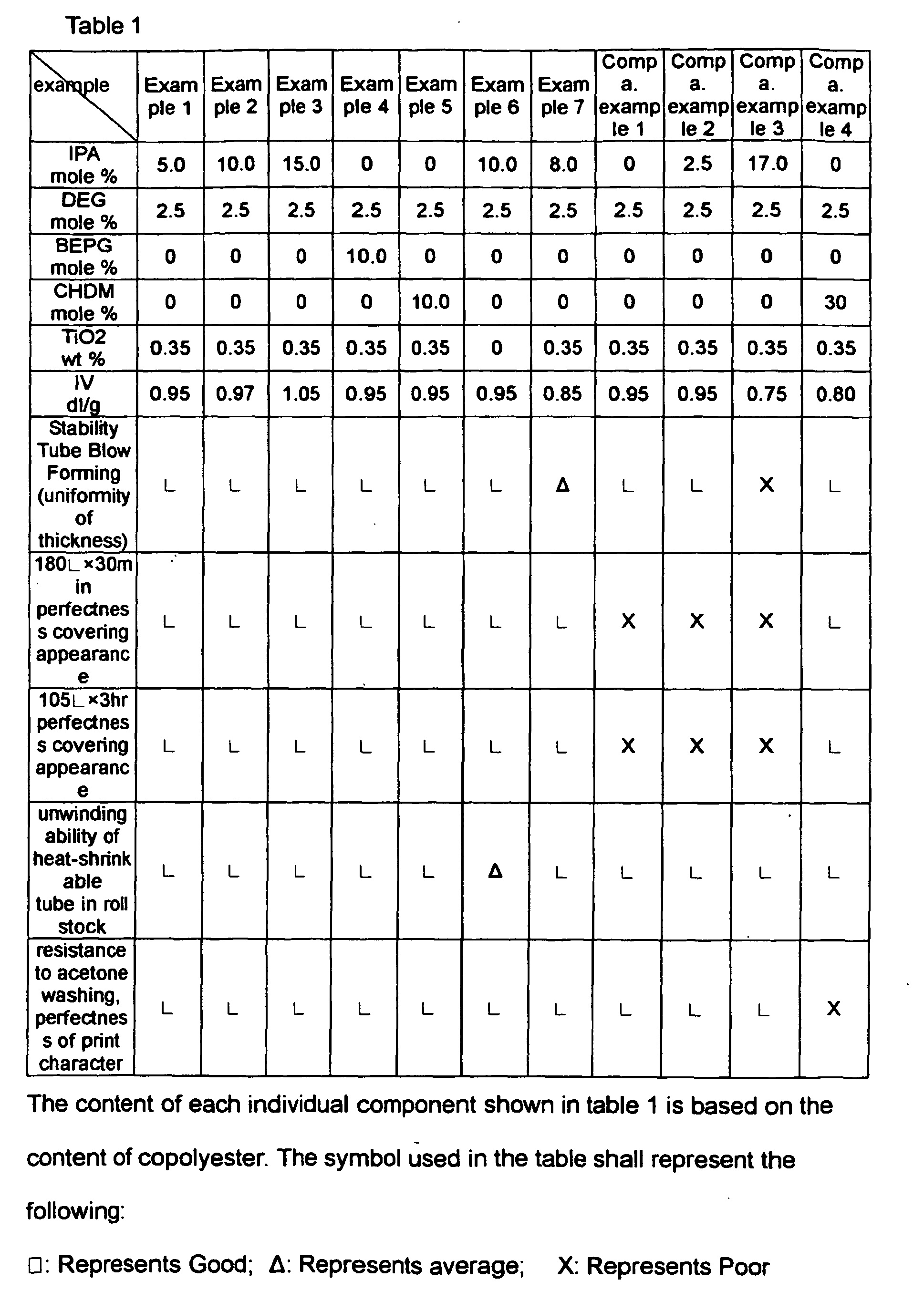

## Claims

1. A copolyester suitable for producing heat-shrinkable tube obtained by having diacid material or ester thereof react with diol material, **characterized in that** the diol comprises a major component of ethylene glycol (EG) and at least one minor diol component selected from a group consisting of diethylene glycol, cyclohexane dimethanol (CHDM), propanediol, 2,2-dimethyl-1,3-propanediol (NPG), 2-butyl-2-ethyl-1,3-propanediol (BEPG) and butylene glycol, and the content of the minor diol component is, based on the total diol, less than 10 mole%, and the major component of the diacid is pure terephthalic acid (PTA) or the ester thereof which contains, based on the diacid, 5 to 15 mole% of isophthalic acid (IPA) or ester thereof; and the inherent viscosity of the copolyester is raised to the level between 0.85~1.05 dl/g by means of solid polymerization reaction.

2. The copolyester as described in claim 1, **characterized in that** the copolyester is added in with one type of the inorganic granules selected from a group consisting of titanium dioxide, barium sulfate, calcium carbonate and silicon dioxide, and the size of the inorganic granule is less than 1 µm.

3. The copolyester as described in claim 2, **characterized in that** the size of the inorganic granule is between 0.1∼0.5 µm.

4. A method for producing heat-shrinkable tube by using the copolyester derived from claim 1 as raw material to produce, by means of melt extruding process, the unstretched tube **characterized in that** the unstrechted tube after being heated to a temperature level over glass transition temperature (Tg), undergoes stretching in machine direction and through a blow-expansion step by introducing compressed air stretching in transverse direction to obtain a stretching ratio of 1.0 to 3.0 times in machine direction and a stretching ratio of 1.3 to 4.5 times in transverse direction, and the heat-shrinkable tube so obtained after heating in hot water has a shrinkage between 5%~15% in machine direction and a shrinkage greater than 35% in transverse direction.

5. The method for producing heat-shrinkable tube as described in claim 4, **characterized in that** at least one of the inorganic granules selected from a group consisting of titanium dioxide, barium sulfate, calcium carbonate and silicon dioxide shall be added into the said copolyester, and the content of the inorganic graceless is 0.005~0.5% by weight as based on the weight of said copolyester used for production, and the size of the inorganic granule is small than 1 µm.

6. The method for producing the heat-shrinkable tube as described in claim 4, **characterized in that** the heat-shrinkable tube produced therefrom after being used as covering fitting on the surface of an object which is then heated to a temperature of 180°C for 30 minutes may still maintain a perfect covering condition without deformation of wrinkle, inflation, loose, falling off, crack or standing up.

7. The method for producing the heat-shrinkable tube as described in claim 5, **characterized in that** the heat-shrinkable tube produced therefrom after being used as covering fitting on the surface of an object which is then heated to a temperature of 180°C for 30 minutes may still maintain a perfect covering condition without deformation of wrinkle, inflation, loose, falling off, crack or standing up.

8. The method for producing heat-shrinkable tube as described in claim 4, **characterized in that** the heat-shrinkable produced therefrom after being used as covering fitting on the surface of an object which is then heated to a temperature of 105°C for 180 minutes may still maintain a perfect covering condition without deformation of wrinkle, inflation, loose, falling off, crack or standing up.

9. The method for producing heat-shrinkable tube as described in claim 5, **characterized in that** the heat-shrinkable produced therefrom after being used as covering fitting on the surface of an object which is then heated to a temperature of 105°C for 180 minutes may still maintain a perfect covering condition without deformation of wrinkle, inflation, loose, falling off, crack or standing up.

10. The method for producing heat-shrinkable tube as described in claim 8, **characterized in that** the heat-shrinkable tube produced therefrom and made into roll stock has the character of easy unwinding.

## Patentansprüche

1. Copolyester, der zur Herstellung eines durch Wärme schrumpfbaren Schlauchs geeignet ist und erhalten wird, indem ein Disäurematerial oder ein Ester desselben mit einem Diolmaterial umgesetzt wird, **dadurch gekennzeichnet, dass** das Diol als einen Hauptbestandteil Ethylenglycol (EG) aufweist sowie mindestens einen Diol-Nebenbestandteil, der aus einer Gruppe ausgewählt ist, die aus Diethylenglycol, Cyclohexandimethanol (CHDM), Propandiol, 2,2-Dimethyl-1,3-propandiol (NPG), 2-Butyl-2-ethyl-1,3-propandiol (BEPG) und Butylenglycol besteht und wobei der Gehalt des Diol-Nebenbestandteils, basierend auf dem Gesamtdiol, weniger als 10 Molprozent beträgt und wobei der Hauptbestandteil der Disäure reine Terephtalsäure (PTA) oder der Ester davon ist, der, basierend auf der Disäure, 5 bis 15 Molprozent an Isophtalsäure (IPA) oder Ester davon enthält, und wobei die inhärente Viskosität des Copolyesters auf das Niveau zwischen 0,85 - 1,05 dl/g mittels einer Festpolymerisationsreaktion angehoben wird.

2. Copolyester wie in Anspruch 1 beschrieben, **dadurch gekennzeichnet, dass** der Copolyester mit einer Form der anorganischen Granula zugefügt wird, die aus der Gruppe ausgewählt ist, die aus Titandioxid, Bariumsulfat, Calciumcarbonat und Siliziumdioxid besteht, und dass die Größe der anorganischen Granula unter 1 µm liegt.

3. Copolyester wie in Anspruch 2 beschrieben, **dadurch gekennzeichnet, dass** die Größe der anorganischen Granula zwischen 0,1 - 0,5 µm liegt.

4. Verfahren zur Herstellung eines durch Wärme schrumpfbaren Schlauchs durch Verwenden des Copolyesters nach Anspruch 1 als Rohmaterial, um mittels eines Schmelzextrudiervorgangs den ungedehnten Schlauch herzustellen, **dadurch gekennzeichnet, dass** der ungedehnte Schlauch, nachdem er auf ein Temperaturniveau oberhalb der Glastemperatur (Tg) erwärmt worden ist, eine Dehnung in Bearbeitungsrichtung eingeht und durch einen Blasexpansionsschritt mittels Zuführens von Druckluft eine Dehnung in Transversalrichtung erfährt, um ein Dehnungsverhältnis des 1,0- bis 3,0-fachen in Bearbeitungsrichtung und ein Dehnungsverhältnis des 1,3- bis 4,5-fachen in Transversalrichtung zu erhalten, wobei der so erhaltene durch Wärme schrumpfbare Schlauch nach Erwärmen in heißem Wasser eine Schrumpfung von 5% ∼ 15% in Bearbeitungsrichtung und eine Schrumpfung von mehr als 35 % in Transversalrichtung hat.

5. Verfahren zur Herstellung eines durch Wärme schrumpfbaren Schlauchs wie in Anspruch 4 beschrieben, **dadurch gekennzeichnet, dass** mindestens eines der anorganischen Granula, das aus der Gruppe ausgewählt wird, die aus Titandioxid, Bariumsulfat, Calciumcarbonat und Siliziumdioxid besteht, in den Copolyester hinein gegeben werden soll, und der Gehalt an anorganischen Granula, basierend auf dem Gewicht des für die Herstellung verwendeten Copolyesters, 0,005 ~ 0,5 Gewichtsprozent beträgt und die Größe des anorganischen Granulums unter 1 µm liegt.

6. Verfahren zur Herstellung eines durch Wärme schrumpfbaren Schlauchs wie in Anspruch 4 beschrieben, **dadurch gekennzeichnet, dass** der dadurch hergestellte, durch Wärme schrumpfbare Schlauch, nachdem er als ummantelnde Verkleidung auf der Oberfläche eines Gegenstands verwendet wurde, der dann für 30 Minuten auf eine Temperatur von 180 °C erwärmt wird, noch immer einen perfekt abdeckenden Zustand beibehält, ohne eine Deformation aus einer Falte, einer Aufblähung, einem Lösen, einem Abfallen, einem Brechen oder einem Aufstellen.

7. Verfahren zur Herstellung eines durch Wärme schrumpfbaren Schlauchs wie in Anspruch 5 beschrieben, **dadurch gekennzeichnet, dass** der dadurch hergestellte, durch Wärme schrumpfbare Schlauch, nachdem er als ummantelnde Verkleidung auf der Oberfläche eines Gegenstands verwendet wurde, der dann für 30 Minuten auf eine Temperatur von 180 °C erwärmt wird, noch immer einen perfekt abdeckenden Zustand beibehält, ohne eine Deformation aus einer Falte, einer Aufblähung, einem Lösen, einem Abfallen, einem Brechen oder einem Aufstellen.

8. Verfahren zur Herstellung eines durch Wärme schrumpfbaren Schlauchs wie in Anspruch 4 beschrieben, **dadurch gekennzeichnet, dass** der dadurch hergestellte, durch Wärme schrumpfbare Schlauch, nachdem er als ummantelnde Verkleidung auf der Oberfläche eines Gegenstands verwendet wurde, der dann für 180 Minuten auf eine Temperatur von 105 °C erwärmt wird, noch immer einen perfekt abdeckenden Zustand beibehält, ohne eine Deformation aus einer Falte, einer Aufblähung, einem Lösen, einem Abfallen, einem Brechen oder einem Aufstellen.

9. Verfahren zur Herstellung eines durch Wärme schrumpfbaren Schlauchs wie in Anspruch 5 beschrieben, **dadurch gekennzeichnet, dass** der dadurch hergestellte, durch Wärme schrumpfbare Schlauch, nachdem er als ummantelnde Verkleidung auf der Oberfläche eines Gegenstands verwendet wurde, der dann für 180 Minuten auf eine Temperatur von 105 °C erwärmt wird, noch immer einen perfekt abdeckenden Zustand beibehält, ohne eine Deformation aus einer Falte, einer Aufblähung, einem Lösen, einem Abfallen, einem Brechen oder einem Aufstellen.

10. Verfahren zur Herstellung eines durch Wärme schrumpfbaren Schlauchs wie in Anspruch 8 beschrieben, **dadurch gekennzeichnet, dass** der dadurch hergestellte und zu einem Rollenvorrat gefertigte durch Wärme schrumpfbare Schlauch die Beschaffenheit leichter Abwickelbarkeit hat.

## Revendications

1. Copolyester approprié pour la production d'un manchon thermorétractable obtenu en faisant réaction un composé diacide ou un ester de celui-ci avec un composé diol, **caractérisé en ce que** le diol comprend un composant principal d'éthylène glycol (EG) et au moins un composant diol secondaire choisi dans le groupe constitué par le diéthylène glycol, le cyclohexane diméthanol (CHDM), le propanediol, le 2,2-diméthyl-1,3-propanediol (NPG), le 2-butyl-2-éthyl-1,3-propanediol (BEPG) et le butylène glycol, et la teneur en composant diol secondaire est, par rapport au diol total, inférieure à 10 % en moles, et le composant principal du diacide est l'acide téréphtalique pur (PTA) ou un ester de celui-ci qui comprend, par rapport au diacide, de 5 à 15 % en moles d'acide isophtalique (IPA) ou un ester de celui-ci ; et l'indice logarithmique de viscosité du copolyester est augmenté à un taux compris entre 0,85 et 1,05 dl/g par une réaction de polymérisation en phase solide.

2. Copolyester selon la revendication 1, **caractérisé en ce que** le copolyester est ajouté avec un type de granules inorganiques choisis dans le groupe constitué par le dioxyde de titane, le sulfate de baryum, le carbonate de calcium et le dioxyde de silicium, et la taille du granule inorganique est inférieure à 1 µm.

3. Copolyester selon la revendication 2, **caractérisé en ce que** la taille du granule inorganique est comprise entre 0,1 et 0,5 µm.

4. Procédé de production d'un manchon thermorétractable utilisant le copolyester dérivé de la revendication 1 en tant que matière première pour produire, au moyen d'un procédé d'extrusion de matière fondue, le manchon non allongé **caractérisé en ce que** le manchon non allongé après avoir été chauffé à une température supérieure à la température de transition vitreuse (Tg), subit une élongation dans le sens machine et par une étape d'expansion par gonflement en introduisant de l'air comprimé, une élongation dans le sens transversal pour obtenir un rapport d'élongation de 1,0 à 3,0 fois dans le sens machine et un rapport d'élongation de 1,3 à 4,5 fois dans le sens transversal, et le manchon thermorétractable ainsi obtenu après chauffage dans de l'eau chaude a une rétractabilité comprise entre 5 % et 15% dans le sens machine et une rétractabilité supérieure à 35 % dans le sens transversal.

5. Procédé de production d'un manchon thermorétractable selon la revendication 4, **caractérisé en ce qu'**au moins un des granules inorganiques choisis dans le groupe constitué par le dioxyde de titane, le sulfate de baryum, le carbonate de calcium et le dioxyde de silicium est ajouté dans ledit copolyester, et que la teneur en granule inorganique est de 0,005 à 0,5 % en poids, par rapport au poids dudit copolyester utilisé pour la production, et que la taille du granulé inorganique est inférieure à 1 µm.

6. Procédé de production d'un manchon thermorétractable selon la revendication 4, **caractérisé en ce que** le manchon thermorétractable produit par celui-ci, après avoir été utilisé en tant qu'habillage placé sur la surface d'un objet qui est ensuite chauffé à une température de 180 °C pendant 30 minutes, peut encore conserver un état de recouvrement parfait sans déformation due à des rides, un gonflement, un relâchement, un détachement, des craquelures ou un relèvement.

7. Procédé de production d'un manchon thermorétractable selon la revendication 5, **caractérisé en ce que** le manchon thermorétractable produit par celui-ci, après avoir été utilisé en tant qu'habillage placé sur la surface d'un objet qui est ensuite chauffé à une température de 180 °C pendant 30 minutes, peut encore conserver un état de recouvrement parfait sans déformation due à des rides, un gonflement, un relâchement, un détachement, des craquelures ou un relèvement.

8. Procédé de production d'un manchon thermorétractable selon la revendication 4, **caractérisé en ce que** le manchon thermorétractable produit par celui-ci, après avoir été utilisé en tant qu'habillage placé sur la surface d'un objet qui est ensuite chauffé à une température de 105 °C pendant 180 minutes, peut encore conserver un état de recouvrement parfait sans déformation due à des rides, un gonflement, un relâchement, un détachement, des craquelures ou un relèvement.

9. Procédé de production d'un manchon thermorétractable selon la revendication 5, **caractérisé en ce que** le manchon thermorétractable produit par celui-ci, après avoir été utilisé en tant qu'habillage sur la surface d'un objet qui est ensuite chauffé à une température de 105 °C pendant 180 minutes, peut encore conserver un état de recouvrement parfait sans déformation due à des rides, un gonflement, un relâchement, un détachement, des craquelures ou un relèvement.

10. Procédé de production d'un manchon thermorétractable selon la revendication 8, **caractérisé en ce que** le manchon thermorétractable produit par celui-ci et transformé en un papier rigide a la caractéristique de déroulement facile.
